(19)

**Europäisches Patentamt**
**European Patent Office**
**Office européen des brevets**

(11) **EP 4 687 062 A1**

(12) **EUROPEAN PATENT APPLICATION**

(43) Date of publication:
**04.02.2026 Bulletin 2026/06**

(21) Application number: **25188859.0**

(22) Date of filing: **10.07.2025**

(51) International Patent Classification (IPC):
**G06F 30/20** *(2020.01)*      **B29D 35/00** *(2010.01)*
**G06F 119/08** *(2020.01)*      **G06F 113/22** *(2020.01)*

(52) Cooperative Patent Classification (CPC):
**G06F 30/20; A43B 13/125; B29D 35/122;**
**B29D 35/128;** A43D 2200/60; B33Y 50/00;
B33Y 80/00; G06F 2113/22; G06F 2119/08

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **30.07.2024 DE 102024121719**

(71) Applicant: **adidas AG**
**91074 Herzogenaurach (DE)**

(72) Inventors:
• **SUESSMUTH, Jochen Björn**
**91074 Herzogenaurach (DE)**

• **DYCKMANS, Christoph**
**91074 Herzogenaurach (DE)**
• **HABIBI PARSA, Shadi**
**91074 Herzogenaurach (DE)**
• **SILTAMÄKI, Jarkko Antero**
**91074 Herzogenaurach (DE)**
• **LE, Tru**
**91074 Herzogenaurach (DE)**
• **PRICE, Daniel S.**
**91074 Herzogenaurach (DE)**

(74) Representative: **Bardehle Pagenberg**
**Partnerschaft mbB**
**Patentanwälte Rechtsanwälte**
**Prinzregentenplatz 7**
**81675 München (DE)**

(54) **METHOD, APPARATUS AND COMPUTERPROGRAM FOR OPTIMZING A SHAPE OF A RADIO FREQUENCY ELECTRODE**

(57) Disclosed is a computer-implemented method for optimizing a shape of a radio frequency (RF) top electrode. The method may comprise a step of loading a digital model of the top electrode and a digital model of a bottom electrode. The method may comprise a step of performing a first simulation of an application of RF from the digital model of the top electrode to the digital model of the bottom electrode. The method may comprise a step of determining a first distribution of heat in a synthetic material arranged between the digital model of the top electrode and the digital model of the bottom electrode according to the first simulation. The method may comprise a step of adjusting the digital model of the top electrode based on the first distribution of heat. In addition, a corresponding data processing device, computer program, a top electrode as well as a method for producing a footwear layer using the top electrode is disclosed. Finally, a footwear article comprising the footwear layer is disclosed.

Loading a digital model of a top electrode and a digital model of a bottom electrode.
**102**

Performing a first simulation of an application of RF from the digital model of the top electrode to the digital model of the bottom electrode.
**104**

Determining a first distribution of heat in a synthetic material arranged between the digital model of the top electrode and the digital model of the bottom electrode according to the first simulation.
**106**

Adjusting the digital model of the top electrode based on the first distribution of heat.
**108**

**Fig. 1**

EP 4 687 062 A1

**Description**

**TECHNICAL FIELD**

The present disclosure generally relates to the field of footwear design, and more particularly to techniques for optimizing a shape of a radio frequency (RF) top electrode usable for producing a footwear layer. Certain embodiments may provide for an optimized top electrode which allows for a controlled heating procedure during production of a footwear layer.

**BACKGROUND**

Radio frequency (RF) molding is a technology that has revolutionized various industries, particularly in the field of manufacturing and plastic processing. This innovative process leverages the power of electromagnetic waves in the radio frequency spectrum to heat and mold materials offering numerous advantages over traditional molding techniques such as injection molding, compression molding, and thermoforming.

Historically, molding processes relied on the application of heat through conduction or convection methods. While effective, these methods had limitations, including uneven heating, longer cycle times, and the need for costly toolings and molds. RF molding addresses many of these challenges by providing a more precise, efficient, and flexible solution for shaping a wide range of materials, including thermoplastics, thermosetting plastics, and composites.

The core principle behind RF molding involves the use of RF energy to generate heat within the material itself. This is achieved through the interaction between RF waves and polar molecules within the material causing them to rapidly vibrate and generate heat. This localized and controlled heating process enables the material to soften and become malleable allowing it to take on the desired shape when subjected to pressure within a mold cavity.

Delivering a consistent and uniform heating through the material is performed using an electrode (e.g., a top electrode which delivers the heat from above onto the material). As a result, heating of the material mainly depends on the shape of the used electrode (e.g., the top electrode). Therefore, optimizing and determining the optimal shape of the used electrode, in particular the shape of the top electrode, is key for ensuring a successful RF molding process. However, optimizing the shape of the electrode is a difficult and time-consuming process.

It is therefore an objective of the present disclosure to provide a technique for optimizing the shape of a top electrode, thereby overcoming the above-mentioned disadvantages of the prior art at least in part.

**SUMMARY OF THE DISCLOSURE**

The objective is solved by the subject-matter defined in the independent claims. Advantageous modifications of embodiments of the present disclosure are defined in the dependent claims as well as in the description and the figures.

As a general overview, certain aspects of the present disclosure provide a technique for providing an optimized top electrode which allows for a controlled heating procedure during production of a footwear layer.

One aspect of the present disclosure relates to a computer-implemented method for optimizing a shape of a radio frequency (RF) top electrode. The RF top electrode may be usable for producing a footwear layer or any other suitable product or product component consisting of suitable materials such as synthetic materials (e.g., polymers). The method may comprise a step of loading a digital model of the top electrode and a digital model of a bottom electrode. The method may comprise a step of performing a first simulation of an application of RF from the digital model of the top electrode to the digital model of the bottom electrode. The method may comprise a step of determining a first distribution of heat in a synthetic material arranged between the digital model of the top electrode and the digital model of the bottom electrode according to the first simulation. The method may comprise a step of adjusting the digital model of the top electrode based on the first distribution of heat.

In general, the method of the present disclosure provides a way of implementing simulation for optimizing the shape of a top electrode during manufacturing of footwear (layer(s)). Accordingly, providing the above-described method provides technical advantages related to using simulation for manufacturing processes such as:

- Resource Reduction: Simulation allows manufacturers to identify potential issues in a virtual environment, reducing the need for physical prototypes and costly trial-and-error testing. This can result in significant resource savings in product development and manufacturing.

- Time Savings: Simulations enable rapid testing and optimization of manufacturing processes, leading to shorter development cycles and faster time-to-market for products.

- Efficiency Improvement: Manufacturers can use simulations to optimize production processes, such as material flow, machine utilization, and production scheduling. This can lead to increased efficiency, reduced waste, and improved resource utilization.

- Quality Enhancement: By simulating manufacturing processes, manufacturers can identify and address potential quality issues before they occur in real production. This leads to higher-quality products and reduced defects.

- Risk Mitigation: Simulation helps in assessing and mitigating risks associated with manufacturing processes, such as machine breakdowns, supply chain disruptions, or environmental factors. This proactive approach can minimize production disruptions and losses.

- Customization and Flexibility: Manufacturers can use simulation to customize and adapt processes for specific products or production scenarios without making extensive physical changes to equipment or setups.

- Environmental Impact Reduction: Simulation can assist in optimizing processes to reduce energy consumption, waste generation, and overall environmental impact, aligning with sustainability goals.

- Data Collection and Analysis: Simulations generate vast amounts of data, which can be analyzed to gain insights into process performance, identify areas for improvement, and inform decision-making.

- Iterative Design and Optimization: Engineers can use simulations to quickly iterate and optimize designs, materials, and processes to achieve desired performance and material behavior.

One or more of the abode-identified advantages are achieved by performing a first simulation of an application of RF on a synthetic material (e.g., a digital model of this material used for simulation) arranged between two digital models of a top and bottom electrode. The simulation can be monitored (e.g., corresponding data is recorded) and evaluated. This may comprise determining a heat distribution within the synthetic material based on which the shape of the top electrode can be adjusted resulting in an optimized shape of the top electrode. It is to be understood that the method of the present disclosure can also be used for optimizing the shape of other parts (e.g., a mould or assembly).

While the method is described with respect to optimizing the shape of a top electrode, the method may also be applied to optimizing the shape of a bottom electrode. Typically, it is preferred to optimize the top electrode because the top electrode is more interchangeable than the bottom electrode. It may also be possible that the top and/or bottom electrodes can be flipped i.e., depending on their orientation, the top electrode may become the bottom electrode and the bottom electrode may become the top electrode. Accordingly, loading a digital model of the top and bottom electrode may either refer to loading of some default models or some previously optimized model(s).

According to another aspect of the present disclosure, the method may further comprise a step of performing, in a subsequent simulation iteration, a second simulation of the application of RF from the adjusted digital model of the top electrode to the digital model of the bottom electrode. The method may further comprise a step of determining a second distribution of heat in the synthetic material arranged between the adjusted digital model of the top electrode and the digital model of the bottom electrode according to the second simulation. The method may further comprise a step of adjusting the adjusted digital model of the top electrode based on the second distribution of heat.

Performing subsequent simulation iterations results in a further optimization of the shape. This is because after each simulation, a new (e.g., second) heat distribution within the synthetic material is obtained based on which the top electrode shape can be adjusted. Accordingly, performing one or more subsequent iterations may be preferable until a top electrode is obtained which shape results in a desired heat distribution within the synthetic material.

According to another aspect of the present disclosure, adjusting may comprises a step of adapting a surface of the digital model of the top electrode based on the first and/or the second distribution of heat and a reference distribution of heat.

Throughout the present disclosure, the term 'surface' may refer to a connected two-dimensional manifold in a three-dimensional space or volume.

For example, a surface may be understood as a mathematical representation of a geometric object that exists in three-dimensional space. It is a collection of points, each of which has a neighborhood that is homeomorphic (topologically equivalent) to a portion of three-dimensional Euclidean space. In simpler terms, a 3D surface is a three-dimensional shape or object that can be defined or described mathematically.

Throughout the present disclosure, the term 'reference distribution" may refer to a desired distribution of heat within the synthetic material. It may be predefined or determined dynamically for each iteration.

Adjusting the surface of the digital model of the top electrode results in a different shape of the top electrode. By taking into account the reference distribution, the surface of the digital model of the top electrode is adjusted in a way which results in a faster convergence of the heat distribution obtained by the simulation towards the reference heat distribution.

According to another aspect of the present disclosure, the surface of the digital model of the top electrode may comprises a plurality of parts, wherein each part may be associated with a position of the synthetic material. Each part of the plurality of parts may be associated with a temperature of the first and/or second distribution of heat in the synthetic material at the associated position.

Throughput the present disclosure, the term 'part' in context of the surface of the top electrode may refer to a three-dimensional point of the surface which comprises of a two-dimensional position (e.g., x and y coordinates) and corresponding height (e.g., z coordinate). 'Associated with a position of the synthetic material' in this context may refer to a part of the top electrode being in contact or applying RF on the corresponding position of the synthetic material. In other words, each part of the surface of the top electrode may apply RF on one position (e.g., directly) or on a plurality of positions (e.g., indirectly) of the synthetic material. Accordingly, each part of the top electrode may be associated with the temperature of the heat distribution at an associated position within the synthetic material.

According to another aspect of the present disclosure, adapting the surface of the digital model of the top electrode may further comprise a step of determining at least one position of the synthetic material in which a temperature difference between the first distribution of heat and the reference distribution of heat and/or between the second distribution of heat and the reference distribution exists. The method may further comprise a step of increasing and/or decreasing a height of a part of the plurality of parts associated with the at least one position according to the temperature difference.

This way, a very accurate way of determining where to adapt the surface of the top electrode is provided. When a temperature difference at a certain position is determined, the corresponding part of the surface associated with the position of the synthetic material can be adjusted. For example, if the temperature difference at a certain position indicates that the simulated heat is too high compared to the reference heat distribution (e.g., compared to a temperature at the same position of the reference heat distribution), the height of the corresponding part can be decreased. As a result, the corresponding part of the surface will be in greater distance to the synthetic material when performing a subsequent simulation iteration which may result in less temperature at the corresponding position within the synthetic material. On the other hand, if the temperature difference at a certain position indicates that the simulated heat is too low compared to the reference heat distribution, the height of the corresponding part can be increased. This way, the heat distribution obtained by the simulation can better converge to the reference distribution.

According to another aspect of the present disclosure, each part of the plurality of parts may be of cuboid shape.

Due to its shape a part may evenly radiate the RF resulting in an evenly generated heat and thus temperature within the synthetic material at the associated position. However, it is to be understood that depending on the application (e.g., for what type of footwear layer the top electrode is designed) each part may be of ellipsoid shape, circle or other suitable geometric shapes which is suitable for providing a desired heat generation. It may also be possible that shapes of the parts vary within a surface of the top electrode.

According to another aspect of the present disclosure, performing the first and/or second simulation of the application of RF may comprise a step of simulating a heating procedure of the synthetic material using RF based on one or more heat equations.

This way, a reliable way of calculating and simulation the heat distribution within the synthetic material is achieved. Accordingly, adapting of the surface can be done on a reliable information basis.

According to another aspect of the present disclosure, simulating the heating procedure based on the one or more heat equations may be done for a predetermined number of iterations. Each iteration may be associated with a predefined duration of the heating procedure and/or a predefined amount of RF applied during the heating procedure.

According to another aspect of the present disclosure, the method may further comprise a step of providing the first and/or second distribution of heat on a display. The method may further comprise a step of receiving a user input comprising the reference distribution of heat via a display command.

This way, a novel interaction concept is created which supports a user during creation of an optimized shape of the top electrode. In other words, an improved human computer interaction supporting the user with the task of optimizing the shape of the top electrode is provided.

According to another aspect of the present disclosure, the footwear layer may be a midsole and/or the synthetic material may comprise a polymer.

According to another aspect of the present disclosure, the method may further comprise a step of manufacturing a top electrode based on the adjusted digital model of the top electrode.

Another aspect of the present disclosure relates to a data processing device comprising means for performing the method of any one of the aspects described herein.

Another aspect of the present disclosure relates to a computer program comprising instructions, which when executed by a computer, cause the computer to perform the method of any one of the aspects described herein.

Another aspect of the present disclosure relates to a top electrode as obtained by performing the method of any one of the aspects described herein.

Another aspect of the present disclosure relates to a method for producing a footwear layer. The method may comprise a step of creating a mold for the footwear layer using the top electrode according to aspects of the present disclosure. The method may comprise a step of producing the footwear layer using the mold comprising the top electrode.

Due to the top electrode having the optimized shape, it achieves an improved heat distribution resulting in the footwear layer having the desired shape and properties.

Another aspect of the present disclosure relates to a footwear article comprising a footwear layer as obtained by performing the method for producing a footwear layer according to aspects of the present disclosure.

**BRIEF DESCRIPTION OF THE DRAWINGS**

The disclosure may be better understood by reference to the following drawings:

Fig. 1: A flow chart of a method for optimizing a shape of a RF top electrode in accordance with embodiments of the present disclosure.

Fig. 2: An exemplary overview of a process of optimizing a shape of a RF top electrode in accordance with embodiments of the present disclosure.

Fig. 3: An exemplary overview of a graphical interface in accordance with embodiments of the present disclosure.

Figs. 4-5: Exemplary distributions of heat resulting from four simulation iterations in accordance with embodiments of the present disclosure.

Fig. 6: Measurement results from four simulation iterations in accordance with embodiments of the present disclosure.

**DETAILED DESCRIPTION**

In the following, representative embodiments illustrated in the accompanying drawings will be explained. It should be understood that the illustrated embodiments and the following descriptions refer to examples which are not intended to limit the embodiments to one preferred embodiment.

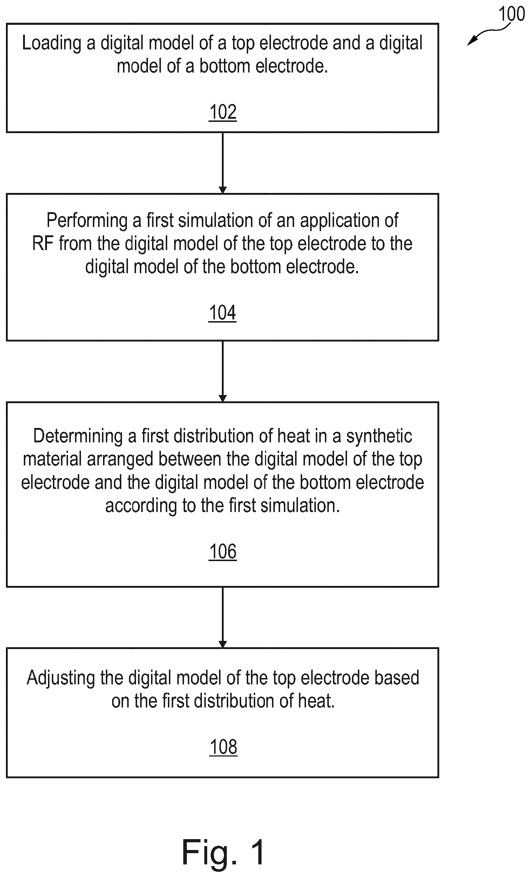

Fig. 1 illustrates a flow chart of a method 100 for method for optimizing a shape of a radio RF top electrode in accordance with an exemplary embodiment. The RF top electrode may be usable for producing a footwear layer or any other suitable product or product component consisting of suitable materials such as synthetic materials (e.g., polymers).

The method 100 may comprise a step 102 of loading a digital model of the top electrode and a digital model of a bottom electrode.

The method 100 may comprise a step 104 of performing a first simulation of an application of RF from the digital model of the top electrode to the digital model of the bottom electrode.

The method 100 may comprise a step 106 of determining a first distribution of heat in a synthetic material arranged between the digital model of the top electrode and the digital model of the bottom electrode according to the first simulation.

The method 100 may comprise a step 108 of adjusting the digital model of the top electrode based on the first distribution of heat.

The method100 may further comprise a step of performing, in a subsequent simulation iteration, a second simulation of the application of RF from the adjusted digital model of the top electrode to the digital model of the bottom electrode. The method may further comprise a step of determining a second distribution of heat in the synthetic material arranged between the adjusted digital model of the top electrode and the digital model of the bottom electrode according to the second simulation. The method may further comprise a step of adjusting the adjusted digital model of the top electrode based on the second distribution of heat.

Adjusting may comprises a step of adapting a surface of the digital model of the top electrode based on the first and/or the second distribution of heat and a reference distribution of heat. The surface of the digital model of the top electrode may comprises a plurality of parts, wherein each part may be associated with a position of the synthetic material. Each part of the plurality of parts may be associated with a temperature of the first and/or second distribution of heat in the synthetic material at the associated position.

Adapting the surface of the digital model of the top electrode may further comprise a step of determining at least one position of the synthetic material in which a temperature difference between the first distribution of heat and the reference distribution of heat and/or between the second distribution of heat and the reference distribution exists.

The method may further comprise a step of increasing and/or decreasing a height of a part of the plurality of parts associated with the at least one position according to the temperature difference. Each part of the plurality of parts may be of cuboid shape.

Performing the first and/or second simulation of the application of RF may comprise a step of simulating a heating procedure of the synthetic material using RF based on one or more heat equations. The one or more heat equations may comprise two Maxwell equations governing interaction of an electromagnetic field with material properties of the synthetic material arranged between the digital model of the top electrode and the digital model of the bottom electrode. The two Maxwell equations may be noted as:

$$\overline{\nabla} \times \overline{H} = \sigma \overline{E} + \varepsilon \frac{\partial \overline{E}}{\partial t}$$

Where,

$\overline{E}$, electric field vector,
$\overline{H}$, magneticfield vector,
$\sigma$, conductivity,
$\varepsilon$, permittivity,
$\mu$, permeability.

$$\overline{\nabla} \times \overline{E} = -\mu \frac{\partial \overline{H}}{\partial t}$$

The one or more heat equations may further comprise sinusoidal time varying steady state governing equations modelling application of a RF frequency range usage . These equations may be noted as:

$$\overline{\nabla} \times \overline{H} = \sigma \overline{E} + j\omega\varepsilon \overline{E}$$

where $\omega$ is the angular frequency and

$$\overline{\nabla} \times \overline{E} = -j\omega\mu \overline{H}$$

$j$ is the complex operator.

The one or more heating equations may further comprise an equation modelling the radio frequency interaction with material during heating related to the permittivity of the material. A complex relative permittivity may comprise a real part which is responsible for phase shift and an imaginary part which is responsible for the energy loss. This equation may be noted as:

$$\varepsilon_r = \varepsilon_r' - j\varepsilon_r''  \quad ,$$

wherein $\varepsilon'$ is the relative permittivity (also called dielectric constant) and $\varepsilon''$ is the loss or dissipation factor.

The one or more heat equations may further comprise a governing equation relating the current density to the material properties, which may be noted as:

$$\overline{J} = (\sigma + \varepsilon_0\,\varepsilon_r''\,\omega)\overline{E} + j\,\varepsilon_0\,\varepsilon_r'\,\overline{E} \quad \text{Where,}\,\overline{J},\,\text{Current density}$$

The corresponding dielectric loss component of interest to RF heating may be noted as:

$$\overline{J} = \varepsilon_0\,\varepsilon_r''\,\omega\overline{E}$$

The corresponding power dissipation factor per unit volume (Pv) in W/m$^3$ for the dielectric loss effect may be noted as:

$$P_v = \varepsilon_0\, \varepsilon_r''\, \omega E^2$$

This equation may be used to estimate the overall volumetric behavior and other limiting design parameters. Finally, the heating of the synthetic material may be governed by a Fourier heat transfer equation which may be noted as:

$$\rho C_p \frac{\partial T}{\partial t} + \nabla(-k\,\nabla T) = P_v$$

, where $p$ is the density, $C_p$ is the specific heat, $k$ is the thermal conductivity and $T$ is the temperature.

Simulating the heating procedure based on the one or more heat equations may be done for a predetermined number of iterations. Each iteration may be associated with a predefined duration of the heating procedure and/or a predefined amount of RF applied during the heating procedure.

The method may further comprise a step of providing the first and/or second distribution of heat on a display. The method may further comprise a step of receiving a user input comprising the reference distribution of heat via a display command. The footwear layer may be a midsole and/or the synthetic material may comprise a polymer.

The method may further comprise a step of manufacturing a top electrode based on the adjusted digital model of the top electrode.

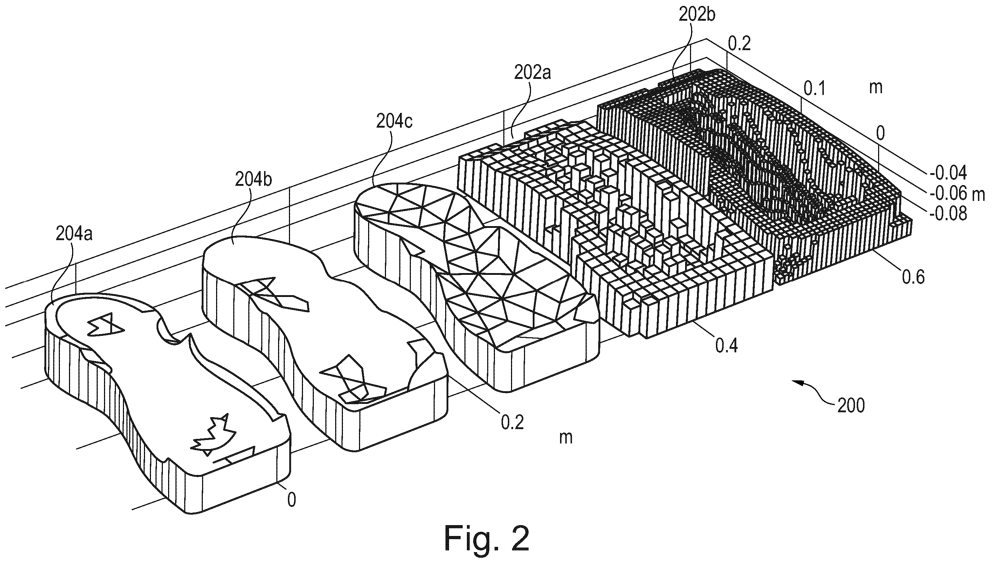

Fig. 2 illustrates an exemplary overview 200 of a process of optimizing a shape of a RF top electrode 202a-b and 204a-c in accordance with embodiments of the present disclosure. For comparison, top electrodes 204a-c resulting from manual design iterations are displayed. As one can see, the top electrode 202a-b using the method of the present disclosure comprises a way more detailed surface (indicated by the smaller cuboids representing the surface). One can also see, that the top electrode 202b of a second iteration compared to the top electrode 202a of a first iteration was adjusted to achieve a better, desired heat distribution.

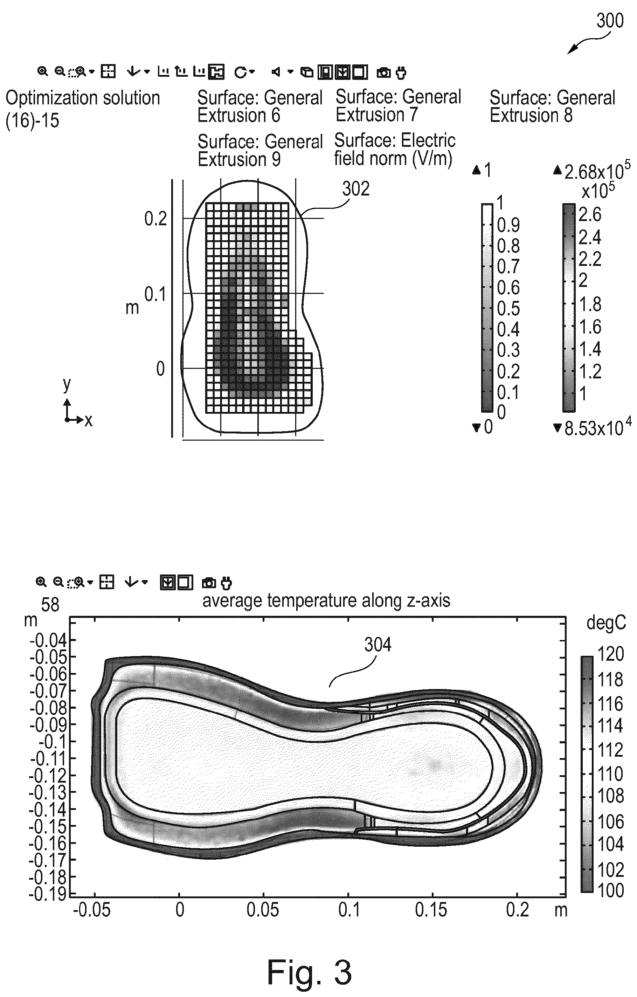

Fig. 3 illustrates an exemplary overview 300 of a graphical interface 302, 304 in accordance with embodiments of the present disclosure. The graphical interface 302 illustrates a surface of a digital model of a top electrode, wherein the surface comprise a plurality of parts represented by cuboids. Each part has a certain height as indicated by the greyscale. A part with high height is indicated white whereas a part with low height is indicated black. Accordingly, an applied temperature at a part with high height has less effect on the synthetic material compared to a part with low height at which the temperature is applied. The graphical interface 304 illustrates a corresponding distribution of heat within the synthetic material using the top electrode illustrated in the graphical interface 302. As one can see, positions of the synthetic material which are associated with parts of high height of the top electrode are of lower temperature compared to positions of the synthetic material which are associated with parts of lower height of the top electrode.

Providing the graphical interfaces 302 and/or 304 may allow a user to issue a user input comprising a reference distribution of heat via a display command. For example, the user may click or tap on a position of the heat distribution displayed in graphical interface 304 and provide a corresponding reference temperature for that given part. As a result, a temperature difference may be determined, and a height of a part associated with the position is increased or decreased according to the temperate difference. For example, if the user indicates that the synthetic material became too hot at the position, the reference distribution of heat may indicate that a lower temperature at the position is desired. As a result, the height of the part of the top electrode associated with the position may be decreased. For example, if the user indicates that the synthetic material became too cold at the position, the reference distribution of heat may indicate that a higher temperature at the position is desired. As a result, the height of the part of the top electrode associated with the position may be increased. The change of height of the corresponding part(s) of the top electrode may interactively be displayed in the graphical interface 302 illustrating the surface of the top electrode. In other words, a user providing corresponding user inputs with a reference heat distribution may directly observe the change within the surface of the top electrode according to the provided reference heat distribution. It is also possible that the reference heat distribution is predefined and accessed for determining the potential temperature difference(s). In this case, the additional user input may not be necessary.

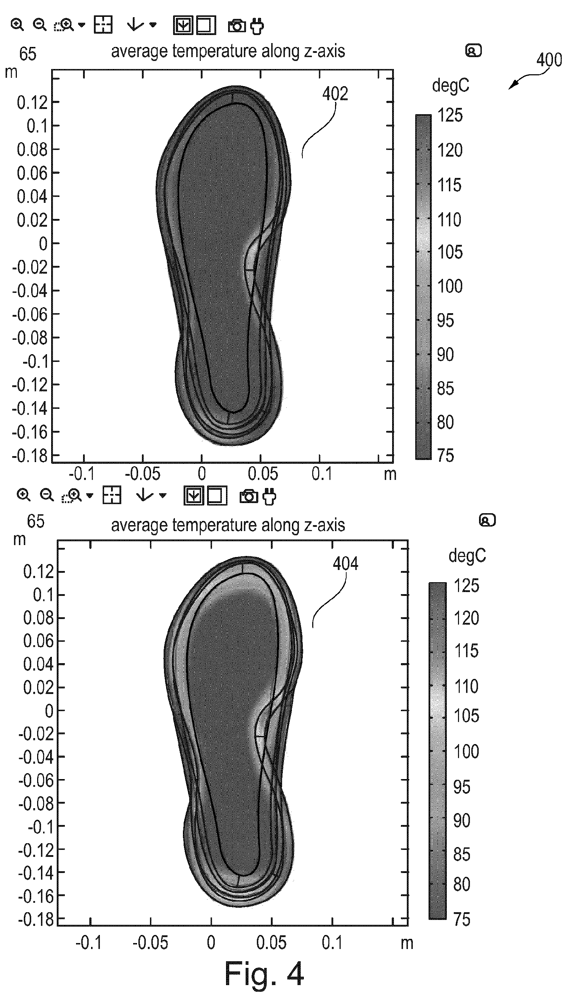

Fig. 4 illustrates an overview 400 of two distributions of heat 402, 404 according to aspects of the present disclosure. The heat distribution 402 may refer to a first distribution of heat resulting from a first simulation iteration and the heat distribution 404 may refer to a second distribution of heat resulting from a subsequent, second simulation iteration. The heat distribution 402 may thus result from using a digital model of a top electrode wherein the heat distribution 404 may result from using an adjusted digital model of the top electrode. Adjusting may as explained above be done according to a reference distribution of heat. As one can see from the dark areas within the heat distribution 402, temperature within the synthetic material is relatively low. Accordingly, a temperature difference between the heat distribution 402 and a reference distribution of heat may be determined, and the digital model of the top electrode adjusted (e.g., by increasing the height of corresponding parts of the surface of the top electrode). The result may then be seen in the heat distribution 404. As can be seen from the distribution of heat 404, the surrounding temperature (i.e., the temperature at the edges of the synthetic material) is rising as highlighted by the lighter coloring.

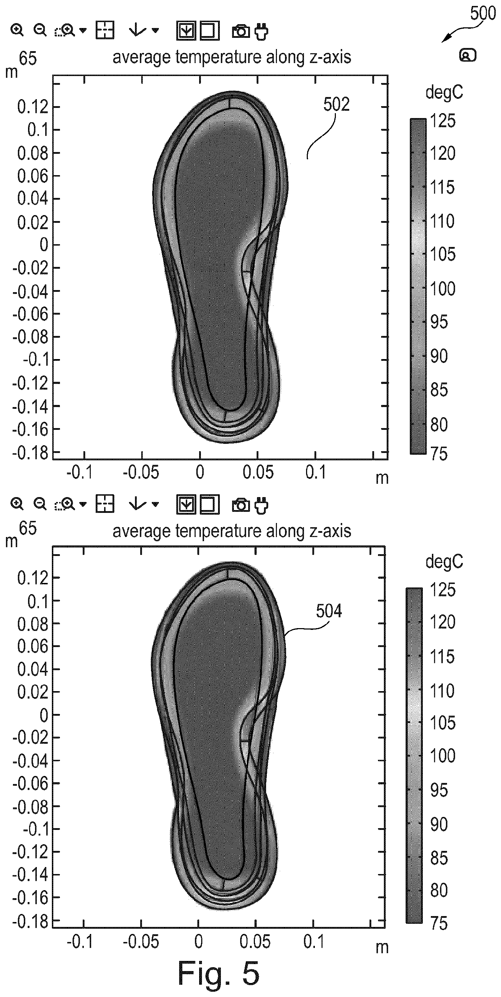

Fig. 5 illustrates an overview 500 of two distributions of heat 502, 504 according to aspects of the present disclosure. The heat distribution 502 may refer to a third distribution of heat resulting from a third simulation iteration (i.e., an iteration subsequent to the second simulation iteration explained with respect to Fig. 4) and the heat distribution 504 may refer to a fourth distribution of heat resulting from a subsequent, second fourth iteration. The heat distribution 502 may thus result from using an (further) adjusted digital model of a top electrode wherein the heat distribution 504 may result from using an (even further) adjusted digital model of the top electrode. Adjusting may as explained above be done according to a reference distribution of heat. After adjusting the digital model for the third simulation iteration, one can see that the temperature within the distribution of heat 502 compared to the distribution of heat 404, has slightly decreased at the edges of the synthetic material which may result in less temperature difference compared to the reference distribution of heat. In contrary, the distribution of heat 502 compared to the distribution of heat 504 does not comprise significant differences which combined with the fact that no substantial temperature difference compared to the reference distribution of heat is determined may indicate that the optimal shape of the top electrode is determined. Using said top electrode a corresponding footwear layer and footwear article comprising the footwear layer can be produced.

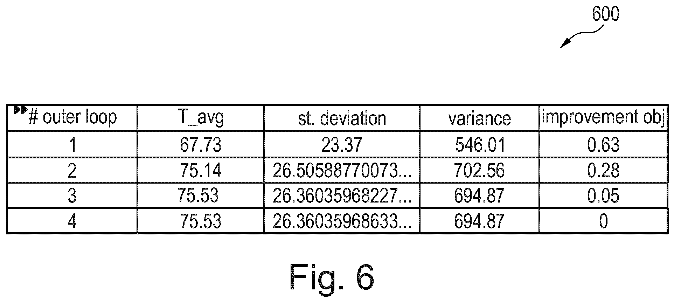

Fig. 6 illustrates measurement results 600 of the four simulation iterations 402, 404 and 502, 504 as explained with respect to Figs. 4 and 5. The left column "#outer loop" indicates the number of the corresponding simulation iteration. For example, the first row as indicated by "#outerloop =1" relates to the first simulation iteration yielding the distribution of heat 402, the second row as indicated by "#outerloop=2" relates to the subsequent second simulation iteration yielding the distribution of heat 404 and so forth. An amount of simulation iterations may be predefined (e.g., 4) or may depend on a determined temperature difference (e.g., whether a temperature difference between the distribution of heat and the reference distribution of heat can be determined or whether the difference is less than a predefined threshold). In the latter, it may be possible that simulation iterations are performed until the temperature difference is smaller than the predefined threshold (e.g., a positive number).

The second column "T_avg" illustrates the averaged temperature over a certain part of the synthetic material (e.g., over the entire material or only over portion of the material such as a midsole). As one can see, after the first simulation iteration (refer to the distribution of heat 402), the average temperature was 67.73 and thus quite low compared to the reference heat distribution. During the subsequent simulation iterations (refer to the distribution of heat 405 as well as 502 and 504), the average temperature increased from 67.73 over 75.14 to 75.53 and thus converged to the reference heat distribution. This improvement with respect to the desired reference heat distribution can also be observed in the right column called "improvement obj", which indicates an error (e.g., temperature difference(s)) calculated between the corresponding distribution of heat and the reference distribution of heat. As one can see, said error was decreased during performing the simulation iterations indicating that the shape of the top electrode yielding the final result of an error of zero represent the optimal shape for the top electrode.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Embodiments of the present disclosure may be implemented on a computer system. The computer system may be a local computer device (e.g., personal computer, laptop, tablet computer or mobile phone) with one or more processors and one or more storage devices or may be a distributed computer system (e.g., a cloud computing system with one or more processors and one or more storage devices distributed at various locations, for example, at a local client and/or one or more remote server farms and/or data centers). The computer system may comprise any circuit or combination of circuits. In one embodiment, the computer system may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), or any other type of processor or processing circuit. Other types of circuits that may be included in the computer system may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system may include one or more storage devices, which may include one or more memory elements suitable to the particular application, such as a main memory in the form of random-access memory (RAM), one or more hard drives, and/or one or more drives that handle removable media such as compact disks (CD), flash memory cards, digital video disk (DVD), and the like. The computer system may also include a display device, one or more speakers, and a keyboard and/or controller, which can include a mouse, trackball, touch screen, voice-recognition device, or any other device that permits a system user to input information into and receive information from the computer system.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the present disclosure can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the present disclosure comprise a data carrier having electronically readable control signals, which are capable of cooperating with a programmable computer system, such that one of the methods described herein is performed.

Generally, embodiments of the present disclosure can be implemented as a computer program product with a program code, the program code being operative for performing one of the methods when the computer program product runs on a computer. The program code may, for example, be stored on a machine-readable carrier.

Other embodiments comprise the computer program for performing one of the methods described herein, stored on a machine-readable carrier.

In other words, an embodiment of the present disclosure is, therefore, a computer program having a program code for performing one of the methods described herein, when the computer program runs on a computer.

A further embodiment of the present disclosure is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitory. A further embodiment of the present disclosure is an apparatus as described herein comprising a processor and the storage medium.

A further embodiment of the present disclosure is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the present disclosure comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

In the following, further inventive embodiments are described:

1. A computer-implemented method for optimizing a shape of a radio frequency (RF) top electrode usable for producing a footwear layer:

loading a digital model of the top electrode (102) and a digital model of a bottom electrode (104);
performing a first simulation of an application of RF from the digital model of the top electrode (102) to the digital model of the bottom electrode (104);
determining a first distribution of heat in a synthetic material (106) arranged between the digital model of the top electrode (102) and the digital model of the bottom electrode (104) according to the first simulation; and
adjusting (202, 204) the digital model of the top electrode (102) based on the first distribution of heat.

2. The method of embodiment 1, further comprising:

performing, in a subsequent simulation iteration, a second simulation of the application of RF from the adjusted digital model of the top electrode to the digital model of the bottom electrode;
determining a second distribution of heat in the synthetic material arranged between the adjusted digital model of the top electrode and the digital model of the bottom electrode according to the second simulation; and
adjusting (202, 204) the adjusted digital model of the top electrode based on the second distribution of heat.

3. The method of any one of the embodiments 1-2, wherein adjusting comprises:
adapting a surface of the digital model of the top electrode (102) based on the first and/or the second distribution of heat and a reference distribution of heat.

4. The method of the preceding embodiment wherein the surface of the digital model of the top electrode comprises:

a plurality of parts, wherein each part is associated with a position of the synthetic material; and
wherein each part of the plurality of parts is associated with a temperature of the first and/or second distribution of heat in the synthetic material at the associated position.

5. The method of the preceding embodiment, wherein adapting the surface of the digital model of the top electrode further comprises:

determining at least one position of the synthetic material in which a temperature difference between the first distribution of heat and the reference distribution of heat and/or between the second distribution of heat and the reference distribution exists; and
increasing and/or decreasing a height of a part of the plurality of parts associated with the at least one position according to the temperature difference.

6. The method of any one of the embodiments 4-5, wherein each part of the plurality of parts is of cuboid shape.

7. The method of any one of the preceding embodiments, wherein performing the first and/or second simulation of the application of RF comprises:
simulating a heating procedure of the synthetic material using RF based on one or more heat equations.

8. The method of the preceding embodiment, wherein simulating the heating procedure based on the one or more heat equations is done for a predetermined number of iterations; and
wherein each iteration is associated with a predefined duration of the heating procedure and/or a predefined amount of RF applied during the heating procedure.

9. The method of any one of the preceding embodiments further comprising:

providing the first and/or second distribution of heat on a display; and
receiving a user input comprising the reference distribution of heat via a display command.

10. The method of any one of the preceding embodiments, wherein the footwear layer is a midsole; and/or
wherein the synthetic material comprises a polymer.

11. The method of any one of the preceding embodiments further comprising:
manufacturing a top electrode based on the adjusted digital model of the top electrode.

12. A data processing device comprising means for performing the method of any one of the preceding embodiments.

13. A computer program or a computer-readable medium having stored thereon a computer program, the computer program comprising instructions which, when the computer program is executed by a computer, cause the computer to carry out the method of any one of the preceding claims.

14. A top electrode as obtained by performing the method of any one of embodiments 1-11.

15. A method for producing a footwear layer, the method comprising:

creating a mold for the footwear layer using the top electrode of embodiment 14; and
producing the footwear layer using the mold comprising the top electrode.

16. A footwear article comprising a footwear layer as obtained by performing the method for producing a footwear layer according to embodiment 15.

**Claims**

1. A computer-implemented method for optimizing a shape of a radio frequency (RF) top electrode usable for producing a footwear layer:

   loading a digital model of the top electrode (102) and a digital model of a bottom electrode (104);
   performing a first simulation of an application of RF from the digital model of the top electrode (102) to the digital model of the bottom electrode (104);
   determining a first distribution of heat in a synthetic material (106) arranged between the digital model of the top electrode (102) and the digital model of the bottom electrode (104) according to the first simulation; and
   adjusting (202, 204) the digital model of the top electrode (102) based on the first distribution of heat.

2. The method of claim 1, further comprising:

   performing, in a subsequent simulation iteration, a second simulation of the application of RF from the adjusted digital model of the top electrode to the digital model of the bottom electrode;
   determining a second distribution of heat in the synthetic material arranged between the adjusted digital model of the top electrode and the digital model of the bottom electrode according to the second simulation; and
   adjusting (202, 204) the adjusted digital model of the top electrode based on the second distribution of heat.

3. The method of any one of the claims 1-2, wherein adjusting comprises:
   adapting a surface of the digital model of the top electrode (102) based on the first and/or the second distribution of heat and a reference distribution of heat.

4. The method of the preceding claim wherein the surface of the digital model of the top electrode comprises:

   a plurality of parts, wherein each part is associated with a position of the synthetic material; and
   wherein each part of the plurality of parts is associated with a temperature of the first and/or second distribution of heat in the synthetic material at the associated position.

5. The method of the preceding claim, wherein adapting the surface of the digital model of the top electrode further comprises:

   determining at least one position of the synthetic material in which a temperature difference between the first distribution of heat and the reference distribution of heat and/or between the second distribution of heat and the reference distribution exists; and
   increasing and/or decreasing a height of a part of the plurality of parts associated with the at least one position according to the temperature difference.

6. The method of any one of the claims 4-5, wherein each part of the plurality of parts is of cuboid shape.

7. The method of any one of the preceding claims, wherein performing the first and/or second simulation of the application of RF comprises:
   simulating a heating procedure of the synthetic material using RF based on one or more heat equations.

8. The method of the preceding claim, wherein simulating the heating procedure based on the one or more heat equations is done for a predetermined number of iterations; and
   wherein each iteration is associated with a predefined duration of the heating procedure and/or a predefined amount of RF applied during the heating procedure.

9. The method of any one of the preceding claims further comprising:

   providing the first and/or second distribution of heat on a display; and
   receiving a user input comprising the reference distribution of heat via a display command.

10. The method of any one of the preceding claims, wherein the footwear layer is a midsole; and/or

    wherein the synthetic material comprises a polymer; and/or

wherein the method further comprises manufacturing a top electrode based on the adjusted digital model of the top electrode.

11. A data processing device comprising means for performing the method of any one of the preceding claims.

12. A computer program or a computer-readable medium having stored thereon a computer program, the computer program comprising instructions which, when the computer program is executed by a computer, cause the computer to carry out the method of any one of the preceding claims.

13. A top electrode as obtained by performing the method of any one of claims 1-10.

14. A method for producing a footwear layer, the method comprising:

creating a mold for the footwear layer using the top electrode of claim 13; and
producing the footwear layer using the mold comprising the top electrode.

15. A footwear article comprising a footwear layer as obtained by performing the method for producing a footwear layer according to claim 14.

Loading a digital model of a top electrode and a digital
model of a bottom electrode.

102

Performing a first simulation of an application of
RF from the digital model of the top electrode to the
digital model of the bottom electrode.

104

Determining a first distribution of heat in a synthetic
material arranged between the digital model of the top
electrode and the digital model of the bottom electrode
according to the first simulation.

106

Adjusting the digital model of the top electrode based
on the first distribution of heat.

108

100

# Fig. 1

Fig. 2

300

Optimization solution (16)-15

Surface: General Extrusion 6  Surface: General Extrusion 7  Surface: General Extrusion 8

Surface: General Extrusion 9  Surface: Electric field norm (V/m)

302

average temperature along z-axis

304

Fig. 3

Fig. 4

Fig. 5

600

| # outer loop | T_avg | st. deviation | variance | improvement obj |
|---|---|---|---|---|
| 1 | 67.73 | 23.37 | 546.01 | 0.63 |
| 2 | 75.14 | 26.50588770073... | 702.56 | 0.28 |
| 3 | 75.53 | 26.36035968227... | 694.87 | 0.05 |
| 4 | 75.53 | 26.36035968633... | 694.87 | 0 |

## Fig. 6

Europäisches
Patentamt

European
Patent Office

Office européen
des brevets

**EUROPEAN SEARCH REPORT**

Application Number

EP 25 18 8859

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 103 420 A2 (VERTEX LLC [US]) 23 September 2009 (2009-09-23) | 13-15 | INV. G06F30/20 B29D35/00 |
| Y | * abstract * * paragraph [0018] - paragraph [0026] * * figures 2,3 * ----- | 1-12 | ADD. G06F119/08 G06F113/22 |
| Y | ALFAIFI BANDAR ET AL: "Computer simulation analyses to improve radio frequency (RF) heating uniformity in dried fruits for insect control", INNOVATIVE FOOD SCIENCE AND EMERGING TECHNOLOGIES, ELSEVIER, AMSTERDAM, NL, vol. 37, 16 August 2016 (2016-08-16), pages 125-137, XP029724021, ISSN: 1466-8564, DOI: 10.1016/J.IFSET.2016.08.012 | 1-12 | |
| A | * abstract * * page 127 - page 136 * * figures 5-10 * ----- | 13-15 | |
| Y | ZHI HUANG ET AL: "Computer simulation for improving radio frequency (RF) heating uniformity of food products: A review", CRITICAL REVIEWS IN FOOD SCIENCE AND NUTRITION, vol. 58, no. 6, 2 June 2017 (2017-06-02), pages 1033-1057, XP055633906, USA ISSN: 1040-8398, DOI: 10.1080/10408398.2016.1253000 | 1-12 | |
| A | * abstract * * page 1038 - page 1049 * ----- -/-- | 13-15 | |

TECHNICAL FIELDS SEARCHED (IPC)

G06F
B29D

The present search report has been drawn up for all claims

| Place of search | Date of completion of the search | Examiner |
|---|---|---|
| Munich | 26 November 2025 | Radev, Boyan |

EPO FORM 1503 03.82 (P04C01)

page 1 of 2

## EUROPEAN SEARCH REPORT

Europäisches
Patentamt
European
Patent Office
Office européen
des brevets

**Application Number**

EP 25 18 8859

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | PRIST M ET AL: "Induction Mold Heating: Modelling and Hardware-in-the-Loop Simulation for Temperature Control", 2018 IEEE INTERNATIONAL CONFERENCE ON ENVIRONMENT AND ELECTRICAL ENGINEERING AND 2018 IEEE INDUSTRIAL AND COMMERCIAL POWER SYSTEMS EUROPE (EEEIC / I&CPS EUROPE), IEEE, 12 June 2018 (2018-06-12), pages 1-6, XP033422354, DOI: 10.1109/EEEIC.2018.8493863 [retrieved on 2018-10-16] * the whole document * | 1-15 | |
| A | KIM MYUNG-HUN ET AL: "Optimal locations of heaters in a shoe outsole rubber injection mold using FEA and parametric analysis", INTERNATIONAL JOURNAL OF PRECISION ENGINEERING AND MANUFACTURING, vol. 11, no. 5, 1 October 2010 (2010-10-01), pages 733-739, XP093339915, Springer ISSN: 1229-8557, DOI: 10.1007/s12541-010-0086-0 Retrieved from the Internet: URL:https://link.springer.com/article/10.1007/s12541-010-0086-0> * the whole document * | 1-15 | TECHNICAL FIELDS SEARCHED (IPC) |

The present search report has been drawn up for all claims

| Place of search | Date of completion of the search | Examiner |
|---|---|---|
| Munich | 26 November 2025 | Radev, Boyan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 18 8859

This annex lists the patent family members relating to the patent documents cited in the above-mentioned European search report.
The members are as contained in the European Patent Office EDP file on
The European Patent Office is in no way liable for these particulars which are merely given for the purpose of information.

26-11-2025

| Patent document cited in search report | | Publication date | Patent family member(s) | | Publication date |
|---|---|---|---|---|---|
| EP  2103420 | A2 | 23-09-2009 | CN | 101537675 A | 23-09-2009 |
| | | | EP | 2103420 A2 | 23-09-2009 |
| | | | EP | 2495097 A1 | 05-09-2012 |
| | | | US | 2009236030 A1 | 24-09-2009 |

EPO FORM P0459

For more details about this annex : see Official Journal of the European Patent Office, No. 12/82